# FASCICULE DE BREVET EUROPEEN

(11) **EP 3 728 881 B1**
(45) Date de publication et mention de la délivrance du brevet: **19.01.2022**
(21) Numéro de dépôt: 18842801.5
(22) Date de dépôt: 21.12.2018
(51) Int. Cl.: F16C 32/04, G01N 11/14

(54) **ENSEMBLE ROTATIF A PALIER MAGNÉTIQUE**
DREHANORDNUNG MIT MAGNETLAGER
ROTARY ASSEMBLY WITH MAGNETIC BEARING

(30) Priorité: 22.12.2017 FR 1763153
(43) Date de publication de la demande: 28.10.2020
(73) Titulaire: Rheonova, 38610 Gières (FR)
(72) Inventeur: GHIRINGHELLI, Etienne, 26350 SAINT LAURENT D'ONAY (FR); PATARIN, Jérémy, 38000 GRENOBLE (FR); BLESES, Didier, 38920 CROLLES (FR)
(74) Mandataire: Regimbeau
(86) Numéro de dépôt international: PCT/FR2018/053520
(87) Numéro de publication internationale: WO 2019/122785

(56) Documents cités:
- EP-B1- 0 983 450
- US-A- 4 080 012
- US-A1- 2005 184 609

## Description

### DOMAINE DE L'INVENTION

La présente invention concerne le domaine des ensembles rotatifs à paliers magnétiques possédant une partie de rotor mobile par rapport à une partie fixe de stator. La présente invention concerne également un appareil, tout particulièrement un appareil de mesure rhéologique, comprenant un tel ensemble rotatif.

### ETAT DE LA TECHNIQUE

Un palier permet de maintenir une partie mobile, désignée en tant que « rotor », dans son axe tout en permettant une rotation de celui-ci par rapport à une partie fixe, désignée en tant que « stator ».

Il existe deux catégories principales de paliers pour ensemble rotatif, à savoir les paliers mécaniques dans lesquels le rotor est maintenu dans son axe de rotation par des moyens mécaniques, et les paliers magnétiques dans lesquels le rotor est maintenu dans son axe de rotation par des pièces magnétiques se présentant sous la forme d'aimants.

L'avantage d'un palier magnétique par rapport à un palier mécanique réside dans le fait que le palier magnétique permet de maintenir le rotor dans son axe pendant sa rotation en évitant tout frottement mécanique. En revanche, généralement, pour un palier magnétique le maintien du rotor dans son axe est moins précis qu'un palier mécanique, puisque celui-ci autorise une déflexion du rotor par rapport à son axe de rotation, et est donc utilisé principalement pour des applications ne nécessitant pas que le rotor soit mécaniquement contraint dans son axe de rotation, mais requérant tout de même une absence de frottement. Il peut être par exemple utilisé en étant couplé à une barre de torsion encastrée à une extrémité du rotor pour maintenir axialement le rotor, afin de mesurer un couple sans frottement.

Classiquement, les paliers magnétiques emploient des aimants toroïdaux, c'est-à-dire des aimants qui se présentent sous la forme d'un tore venant encercler une partie du rotor et une partie du stator sensiblement en regard l'une de l'autre. Le document EP0983450 décrit à ce sujet un palier magnétique dans lequel un rotor est relié à un stator par un moyen de maintien axial, et comprend des aimants toroïdaux à chacune de ses extrémités. Le stator comprend également des aimants toroïdaux, sensiblement en regard des aimants du rotor et décalés axialement par rapport à ces derniers. Les aimants du rotor et les aimants du stator sont configurés de manière à se repousser. Ainsi, la force de répulsion des aimants de rotor et de stator tendant à déplacer le rotor axialement, combinée au moyen de maintien axial qui s'oppose au déplacement axial du rotor, permet de maintenir le rotor dans son axe lors de sa rotation.

Un inconvénient du palier magnétique du document EP0983450 réside dans le fait que la force de répulsion entre les aimants du rotor et du stator est à un minimum lorsque le rotor est centré dans sa position idéale, et croit lorsque le rotor s'en écarte. Il serait au contraire préférable que la force soit maximale au centre afin de garantir la stabilité du palier. En effet, lorsque l'on souhaite maximiser la force de rappel de ce palier, on se rapproche d'une position instable qui tend à déstabiliser le palier. Le rotor est régulièrement amené à sortir de son axe pendant sa rotation avant d'être ramené dans son axe par la force de répulsion croissante avec l'éloignement du rotor de son axe.

Un autre inconvénient de ce palier magnétique réside dans la difficulté à changer les pièces qui constituent l'ensemble rotatif. Pour changer une pièce, il est en effet nécessaire de démonter le rotor en le déconnectant du moyen de maintien axial, puis en le faisant coulisser le long de la paroi interne du stator. Ces étapes sont longues et laborieuses, d'autant plus qu'une fois que l'ensemble rotatif a été réassemblé, il est nécessaire de régler de nouveau le positionnement des aimants du palier magnétique le long du rotor et du stator respectivement.

Un tel palier magnétique présente également l'inconvénient d'être sensible à la résonance. En effet, pour des oscillations et/ou à des vitesses de rotation du rotor moyennes à élevées, le rotor en rotation oscille à une certaine fréquence qui peut être amenée à correspondre à ou aux fréquence(s) de résonance de l'ensemble rotatif. Le rotor entre alors en résonance, risquant même de sortir de son axe de rotation, ce qui aboutit à une mesure erronée lorsque l'ensemble rotatif est utilisé pour réaliser une mesure, par exemple une mesure de déplacement ou de couple. Ceci est tout particulièrement contraignant dans le cas où une oscillation précise du rotor est imposée pour réaliser un procédé donné, et que la fréquence d'oscillation imposée correspond également à une fréquence de résonance de l'ensemble rotatif.

### EXPOSE DE L'INVENTION

L'invention a donc pour but de remédier aux inconvénients de l'art antérieur en proposant un ensemble rotatif muni d'un palier magnétique qui permet de maintenir de manière stable le rotor de l'ensemble rotatif dans son axe de rotation, en particulier proche de la position permettant le réglage le plus rigide du palier magnétique, i.e. la position pour laquelle la force de rappel dans l'axe est maximale.

A cette fin, selon un premier aspect, l'invention propose un ensemble rotatif, notamment pour un appareil de mesure rhéologique, comprenant :
- un stator,
- un rotor mobile en rotation par rapport au stator, le rotor étant maintenu axialement par un moyen de maintien axial empêchant le déplacement du rotor le long de son axe de rotation, le moyen de maintien axial comprenant une tige flexible adaptée pour être fixée à un bâti et qui autorise un déplacement radial du rotor,
- un palier magnétique comprenant un élément en matériau magnétique de rotor monté sur le rotor et un élément en matériau magnétique de stator monté sur le stator, l'un au moins des éléments en matériau magnétique de rotor et de stator étant un aimant sphérique,
dans lequel l'ensemble rotatif présente une position stable dans laquelle le rotor est aligné avec son axe de rotation, et les éléments en matériau magnétique sont en regard l'un de l'autre selon l'axe de rotation du rotor et sont séparés l'un de l'autre d'une distance déterminée, et dans lequel les éléments en matériau magnétique sont configurés pour s'attirer l'un vers l'autre, de sorte à générer une force de rappel qui s'oppose au désaxement dudit rotor.

Ainsi, la position stable de l'ensemble rotatif est une position d'équilibre dans laquelle, pour une distance axiale donnée entre l'élément en matériau magnétique de rotor et l'élément en matériau magnétique de stator, la force de rappel du rotor vers son axe est à un maximum. Dans cette position stable, l'ensemble rotatif fonctionne de manière optimale et tend alors à rester dans cette position lorsqu'il est en fonctionnement.

On entend par « aimant » un aimant permanent ou un électroaimant.

On entend par « élément en matériau magnétique » ou simplement « élément magnétique » un élément apte à interagir avec le champ magnétique d'un aimant tel que défini précédemment de manière à être attiré par ledit aimant. Un tel élément magnétique peut être en fer, en nickel, en cobalt, ou en chrome par exemple. Il peut présenter une forme diverse, tel qu'une plaque, un cylindre, un cube, une sphère, ou toute autre forme adaptée à son utilisation au sein de l'ensemble rotatif. En particulier, un tel élément en matériau magnétique peut être un aimant tel que défini précédemment.

Le terme « élément magnétique » défini précédemment se rapporte à un unique élément magnétique ou à une pluralité d'éléments magnétiques, et le cas échéant, à un unique aimant ou à une pluralité d'aimants.

Selon d'autres aspects, l'ensemble rotatif proposé présente les différentes caractéristiques suivantes prises seules ou selon leurs combinaisons techniquement possibles :
- l'élément en matériau magnétique de rotor et l'élément en matériau magnétique de stator comprennent chacun un aimant. De cette manière, à la fois l'élément en matériau magnétique du rotor et l'élément en matériau magnétique du stator exercent l'un sur l'autre une attraction magnétique, et s'attirent donc mutuellement, ce qui accroit la force de rappel du rotor et stabilise davantage le palier magnétique.
- l'élément en matériau magnétique de rotor et l'élément en matériau magnétique de stator sont alignés selon l'axe de rotation du rotor lorsque l'ensemble rotatif est en position stable ;
- l'élément en matériau magnétique du rotor et l'élément en matériau magnétique du stator sont avantageusement de forme sphérique. En effet la forme des éléments en matériau magnétique influe sur les possibilités d'ajustement de la distance qui les sépare. Ainsi que décrit dans la suite du texte, on constate qu'une géométrie sphérique permet de minimiser encore davantage la distance entre les éléments en matériau magnétique lorsque l'ensemble rotatif est en position stable, comparativement à une géométrie cylindrique par exemple. En effet, dans le cas d'une géométrie non sphérique, en particulier cylindrique, une distance trop faible induit un risque de désaxement du rotor en rotation et de blocage du palier, tandis qu'il n'y a pas de risque de désaxement du rotor lorsque l'un au moins des éléments en matériau magnétique de rotor et/ou de stator est sphérique. Dès lors, les interactions magnétiques entre les éléments en matériau magnétique sont maximisées quel que soit leur positionnement relatif l'un par rapport à l'autre, ce qui permet ainsi de maximiser la force de rappel du rotor ;
- l'élément en matériau magnétique de rotor et/ou l'élément en matériau magnétique de stator sont des aimants permanents ;
- l'élément en matériau magnétique de rotor et/ou l'élément en matériau magnétique de stator sont des électroaimants ;
- les éléments en matériau magnétique de rotor et de stator forment chacun un dipôle magnétique, et dans lequel, lorsque le rotor est en position stable, les dipôles magnétiques de rotor et de stator sont alignés l'un avec l'autre selon l'axe du rotor et sont orientés dans une même direction de manière à être attirés l'un vers l'autre ;
- le rotor comprend une tête reliée au moyen de maintien axial, une base agencée en regard de la tête, et une partie intermédiaire qui joint la tête du rotor à sa base, la tête, la base, et la partie intermédiaire délimitant un entrefer de rotor adapté pour recevoir une partie fonctionnelle de stator qui est munie de l'élément en matériau magnétique de stator, l'élément en matériau magnétique de rotor et l'élément en matériau magnétique de la partie fonctionnelle de stator étant alignés avec l'axe du rotor lorsque l'ensemble rotatif est en position stable. La partie fonctionnelle est désignée ainsi car elle comprend l'élément magnétique de stator, et interagit magnétiquement avec l'élément magnétique de rotor, par opposition au reste du stator qui s'étend hors de l'entrefer. La partie fonctionnelle est en particulier une extrémité du stator lorsque le stator présente une forme allongée, dont la longueur est grande devant la largeur. De façon analogue, on désigne par partie fonctionnelle du rotor la partie du rotor qui interagit magnétiquement avec l'élément magnétique de stator ;
- le stator s'étend préférentiellement de manière sensiblement orthogonale à l'axe du rotor. Cet agencement orthogonal optimise l'espace autour du palier magnétique et en simplifie la structure. Un agencement oblique du stator par rapport au rotor ne sort cependant pas de la portée de l'invention ;
- la distance déterminée est ajustable par ajustement de la position axiale de la partie fonctionnelle du stator dans l'entrefer du rotor. La distance déterminée est minimale lorsque l'ensemble rotatif est en position stable, ce qui maximise la force de rappel et garantit la stabilité de l'ensemble rotatif ;
- De préférence, le palier magnétique est passif, c'est-à-dire qu'il ne nécessite aucun apport extérieur d'énergie, et fonctionne uniquement grâce à des forces permanentes d'interaction entre les éléments en matériau magnétique du rotor et du stator. Il peut s'agir d'un palier magnétique à aimants permanents ou d'un palier magnétique à réluctance variable. Un tel palier magnétique passif a l'avantage d'avoir un coût particulièrement bas, en particulier plus bas qu'un palier magnétique actif.

Selon un deuxième aspect, l'invention propose un appareil de mesure rhéologique pour la réalisation d'une mesure de rhéologie, comprenant au moins un ensemble rotatif tel que décrit précédemment.

### DESCRIPTION DES FIGURES

D'autres avantages et caractéristiques de l'invention apparaîtront à la lecture de la description suivante donnée à titre d'exemple illustratif et non limitatif, en référence aux Figures annexées qui représentent :
- la Figure 1, une vue en coupe d'un ensemble rotatif en position stable selon un mode de réalisation, comprenant un palier magnétique muni d'un élément magnétique de rotor et d'un élément magnétique de stator ;
- la Figure 2, une vue en coupe d'un ensemble rotatif semblable à celui de la figure 1 selon un autre mode de réalisation, dans lequel les éléments magnétiques de rotor et de stator sont sphériques ;
- les Figures 3A et 3B, des schémas de principe illustrant l'action de la force de rappel sur le rotor de l'ensemble rotatif de la Figure 1 ;
- les Figures 4A, 4B, et 4C, des schémas de principe illustrant les différences de comportement de l'ensemble rotatif selon que la géométrie des éléments en matériau magnétique est sphérique ou non sphérique ;
- la Figure 5, un schéma de principe de l'ensemble rotatif de la Figure 1 illustrant un désassemblage simplifié du rotor et du stator ;
- la Figure 6, un schéma de principe de l'ensemble rotatif de la Figure 1 illustrant un réglage simplifié de la distance entre les aimants de rotor et de stator ;
- la Figure 7, un graphe représentant l'évolution de la fréquence de résonance de l'ensemble rotatif en fonction de la force d'attraction des aimants de rotor et de stator.

### DESCRIPTION DETAILLEE DE L'INVENTION

Le palier magnétique de l'ensemble rotatif décrit dans le présent texte permet de maintenir un rotor dans son axe de rotation, en particulier lorsque le rotor tourne sur lui-même autour de son axe.

Le palier magnétique décrit est préférentiellement celui d'un ensemble rotatif d'un appareil permettant de réaliser des mesures de rhéologie. Il peut s'agir tout particulièrement d'un rhéomètre ou bien d'un viscosimètre par exemple. Toutefois, l'invention n'est pas limitée à cette seule application.

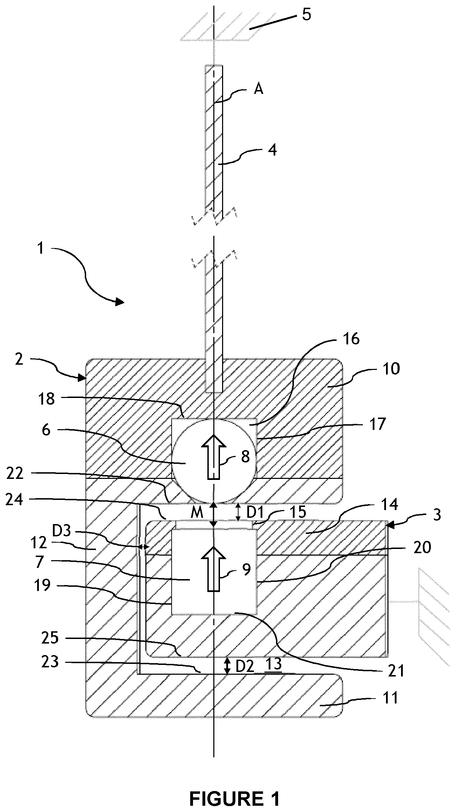

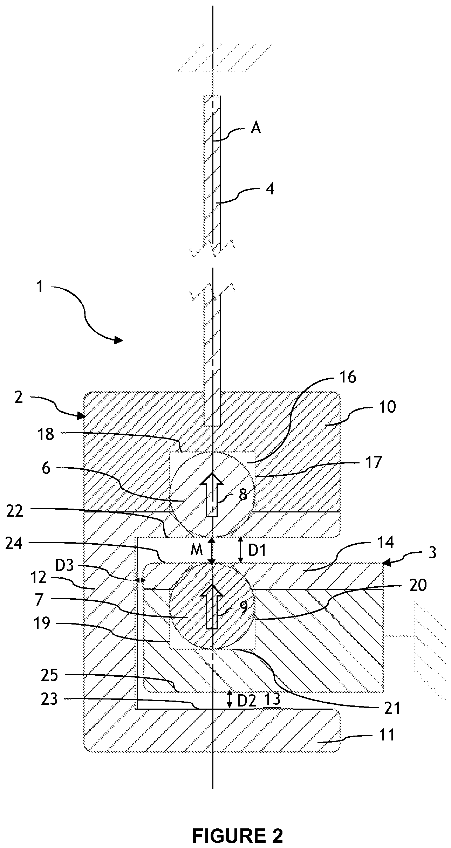

Les Figures 1 et 2 illustrent des modes de réalisation d'un ensemble rotatif 1 selon l'invention, dans lesquels ledit ensemble rotatif se trouve dans une position dite « position stable ». L'ensemble rotatif 1 tend à rester dans cette position stable lorsqu'il est en fonctionnement, c'est-à-dire lorsque le rotor 2 tourne autour de son axe A, et se trouve par défaut dans cette position lorsqu'il est à l'arrêt, c'est-à-dire lorsque le rotor 2 est immobile.

La description qui suit est faite relativement à un ensemble rotatif 1 qui se trouve en position stable. On comprendra bien sûr que l'agencement et le comportement de ses éléments constitutifs sont susceptibles de varier au moins faiblement lors de son fonctionnement, avec la rotation du rotor.

Le rotor 2 est relié à un bâti 5 par un moyen de maintien axial 4 fixé au rotor et au bâti. De préférence, le moyen de maintien axial 4 est encastré dans le bâti 5.

Le moyen de maintien axial 4 se présente avantageusement sous la forme d'une tige alignée avec l'axe de rotation A du rotor 2. Le moyen de maintien axial 4 empêche ainsi le déplacement du rotor 2 selon l'axe A, à savoir vers le haut et vers le bas dans le cas d'une utilisation courante de l'ensemble rotatif 1 selon laquelle l'axe A de rotation du rotor est sensiblement vertical et orthogonal par rapport au plan du support de l'ensemble rotatif.

Le moyen de maintien axial 4 subit un effort de torsion lorsque le rotor 2 tourne autour de son axe, ce qui permet de mesurer un couple.

Cependant, le moyen de maintien axial 4 présente une certaine flexibilité.

Ainsi, comme tout palier magnétique, le rotor peut accepter un désaxement par rapport au stator.

La fixation du moyen de maintien axial 4 flexible au bâti 5, notamment par encastrement, réalise ainsi une butée axiale du rotor 2, tout en éliminant les frottements causés par le déplacement radial dudit rotor.

Selon ces modes de réalisation, le rotor 2 comprend une tête 10 reliée au moyen de maintien axial 4, une base 11 agencée en regard de la tête 10, et une partie intermédiaire 12 qui s'étend parallèlement à l'axe A du rotor et joignant la tête 10 du rotor à sa base 11. La tête 10 du rotor, sa base 11, et la partie intermédiaire 12 délimitent un espace vide 13, désigné par le terme « entrefer de rotor » configuré pour recevoir une partie fonctionnelle du stator qui intercepte l'axe A de rotor. De manière non limitative, le stator 3 s'étend ici dans une direction radiale, c'est-à-dire de manière sensiblement orthogonale à l'axe A du rotor.

Conformément au mode de réalisation représenté sur les figures 1 et 2, le rotor 2 et le stator 3 comprennent chacun un élément en matériau magnétique 6, 7 dont l'agencement ainsi que leur interaction magnétique contribuent à la stabilité de l'ensemble rotatif 1. A cette fin, les éléments en matériau magnétique 6, 7 sont positionnés en regard l'un de l'autre selon l'axe A de rotation du rotor. Ils peuvent être alignés selon l'axe A de rotation du rotor.

Les parties fonctionnelles de rotor et de stator peuvent comprendre des éléments magnétiques de formes diverses. Ces éléments magnétiques peuvent être des aimants, ou bien être simplement des pièces aptes à interagir avec le champ magnétique d'un aimant sans toutefois posséder les propriétés d'attraction magnétique d'un aimant. En particulier, l'un seulement des éléments magnétiques de rotor et de stator peut comprendre un aimant tandis que l'autre comprend un élément magnétique qui n'est pas un aimant, ou bien les éléments magnétiques de rotor et de stator peuvent tous les deux comprendre un aimant. Il est tout de même nécessaire que l'un des éléments magnétiques génère un champ magnétique apte à attirer l'autre élément magnétique, et donc qu'au moins l'élément magnétique de rotor ou l'élément magnétique de stator comprenne un aimant.

Conformément au mode de réalisation représenté sur la figure 1, l'élément en matériau magnétique 6 du rotor est de forme sphérique, tandis que l'élément en matériau magnétique 7 du stator est de forme cylindrique. La forme cylindrique est avantageuse car elle facilite la mise en place des éléments en matériau magnétique dans l'ensemble rotatif, en particulier l'alignement des deux éléments et l'ajustement de la distance M déterminée entre les éléments en matériau magnétique qui sera détaillée dans la suite du présent texte. Les éléments magnétiques de rotor et de stator sont tels que définis précédemment.

L'élément magnétique 6 de rotor est logé dans une cavité 16 prévue à cet effet dans la structure du rotor 2. La cavité 16 est formée d'une paroi latérale 17 qui s'étend autour de l'axe A du rotor 2 parallèlement à celui-ci, et se prolonge en se resserrant au niveau de la surface supérieure 22 de l'entrefer, et d'un fond 18 perpendiculaire à la paroi latérale 17. La paroi latérale 17 et le fond 18 de la cavité 16 sont adaptés pour maintenir l'élément magnétique de rotor 6 dans une position fixe par rapport au rotor 2 lui-même.

L'élément magnétique 7 de stator est logé dans une cavité 19 prévue à cet effet dans la structure du stator 3, au niveau de la partie fonctionnelle 14 du stator 3 logée dans l'entrefer de rotor 13. La cavité 19 du stator 3 a avantageusement une structure similaire et une fonction similaire à celle du rotor, avec une paroi latérale 20 fermée par un fond 21. Du fait de la forme cylindrique de l'élément magnétique 7 de stator, la paroi latérale se prolonge par des butées 15 qui ferment partiellement la cavité au niveau de la surface supérieure 24 du stator.

Conformément au mode de réalisation représenté sur la figure 2, les éléments en matériau magnétique du rotor et du stator sont de forme sphérique.

Le palier magnétique est de préférence un palier magnétique passif. Il peut s'agir d'un palier magnétique à aimants permanents ou d'un palier magnétique à réluctance variable.

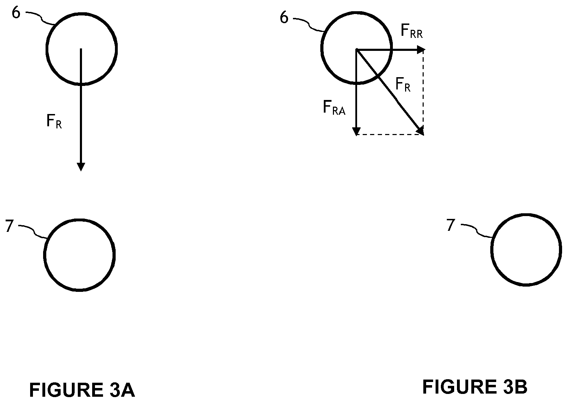

Lorsque l'un des matériaux magnétiques de rotor et de stator est un aimant, par exemple le matériau magnétique de rotor, l'aimant 6 de rotor génère un champ magnétique et est configuré pour attirer l'élément magnétique de stator 7 lorsque son champ magnétique interagit avec celui-ci. L'aimant 6 de rotor et le matériau magnétique 7 de stator forment des dipôles magnétiques 8, 9 préférablement sensiblement alignés entre eux selon l'axe A tels qu'illustrés par les flèches correspondantes sur les Figures 1 et 2. Du fait de la proximité relative du rotor 2 et du stator 3 au sein de l'ensemble rotatif 1, et de l'orientation des dipôles magnétiques, le champ magnétique de l'aimant 6 de rotor interagit avec l'élément magnétique 7 de stator. Dès lors, l'élément magnétique 7 de stator est aimanté par l'aimant 6 de rotor et attiré vers ce dernier. Etant donné que l'aimant de stator est fixe, cette attraction engendre une attraction correspondante de l'aimant 6 de rotor vers l'élément magnétique 7 de stator, qui se traduit par une force de rappel tendant à maintenir le rotor dans son axe de rotation. Cette force de rappel est illustrée sur la Figure 3A schématisant le positionnement des éléments magnétiques de rotor et de stator en position stable. La force de rappel appliquée sur le rotor est illustrée par la flèche référencée F_{R} et est orientée axialement vers le bas.

Lorsque les matériaux magnétiques de rotor et de stator sont des aimants, ils génèrent tous les deux un champ magnétique et sont configurés pour s'attirer mutuellement lorsque leurs champs magnétiques interagissent l'un avec l'autre. Ils forment des dipôles magnétiques 8, 9, préférablement sensiblement alignés l'un avec l'autre selon l'axe A tels qu'illustrés par les flèches correspondantes sur les Figures 1 et 2. Les dipôles magnétiques 8, 9 sont orientés dans une même direction, ici du bas vers le haut de l'axe A. Du fait de la proximité relative du rotor 2 et du stator 3 au sein de l'ensemble rotatif 1, et de l'orientation des dipôles magnétiques, les champs magnétiques des aimants 6, 7 de rotor et de stator interagissent l'un avec l'autre et les aimants 6, 7 de rotor et de stator s'attirent mutuellement. Etant donné que l'aimant de stator est fixe, ces interactions se traduisent par une force de rappel tendant à maintenir le rotor dans son axe de rotation. Cette force de rappel est illustrée sur la Figure 3A.

Malgré l'attraction des éléments magnétiques 6, 7 de rotor et de stator l'un vers l'autre, étant donné que le stator 3 est fixe et que le rotor 2 est maintenu axialement par le moyen de maintien axial 4, la surface supérieure 22 de l'entrefer 13 du rotor au voisinage de l'aimant 6 de rotor et la surface supérieure 24 de la partie fonctionnelle 14 de stator au voisinage de l'aimant 7 de stator, restent en regard l'une de l'autre et séparées axialement par une distance D_{1.}

A cette distance D₁ correspond une distance D₂ entre la surface inférieure 23 de l'entrefer 13 du rotor et la surface inférieure 25 de la partie fonctionnelle 14 de stator. On comprendra que les distances D₁ et D₂ sont susceptibles de varier en fonction du positionnement du stator 3 dans l'entrefer 13 du rotor 2, l'augmentation de l'une de ces distances provoquant une égale diminution de l'autre distance et vice versa. Le stator 3 est séparé de la partie intermédiaire 12 du rotor 2 par une distance D₃ afin d'éviter les frottements du rotor 2 contre le stator 3.

Les éléments magnétiques 6, 7 de rotor et de stator sont quant à eux séparés l'un de l'autre par une distance M déterminée, non nulle. Sur les Figures 1 et 2, les éléments magnétiques 6, 7 sont avantageusement agencés dans l'ensemble rotatif 1 de manière à affleurer au niveau des surfaces supérieure 22, 24 en regard du rotor et du stator respectivement, et ce afin de maximiser les interactions magnétiques entre eux. Dans cet agencement, la distance M est alors sensiblement égale à la distance D1. Il est cependant possible de prévoir d'autres agencements des éléments magnétiques 6, 7 dans la structure du rotor et du stator respectivement afin d'ajuster leurs interactions magnétiques.

Conformément à ce qui vient d'être décrit, lorsque l'ensemble rotatif 1 est en position stable, et pour une distance axiale M prédéterminée entre les éléments magnétiques, la force de rappel est à un maximum.

Lorsque le rotor 2 tourne, celui-ci est susceptible de se désaxer, c'est-à-dire de sortir de son axe A de rotation, et l'ensemble rotatif 1 est susceptible de sortir de sa position stable. Le désaxement du rotor 2 entraine que les éléments magnétiques 6, 7 de rotor et stator ne sont plus en regard l'un de l'autre, et en particulier ne sont plus alignés le cas échéant, selon l'axe A. Les dipôles magnétiques 8, 9 des aimants éléments magnétiques 6, 7 de rotor et/ou de stator ne sont plus alignés entre eux et avec l'axe A,

Cette configuration est illustrée sur la Figure 3B. La composante axiale F_{RA} de la force de rappel F_{R} diminue au profit d'une composante radiale F_{RR} orientée vers l'axe A de rotation et qui tend à ramener le rotor 2 dans son axe A de rotation, en position stable.

De plus, étant donné que la distance M qui sépare les éléments magnétiques 6, 7 est plus grande qu'en position stable, les interactions des champs magnétiques des éléments magnétiques 6, 7 diminuent. La force de rappel est alors plus faible qu'en position stable, et l'ensemble rotatif 1 se trouve dans une position instable qui tend à retourner dans sa position d'équilibre.

Dès lors, la force de rappel est à un maximum quand l'ensemble rotatif 1 est en position stable et que le rotor 2 est aligné avec son axe A de rotation, et diminue avec le désaxement du rotor 2. Ceci implique une stabilité accrue du rotor 2 pendant sa rotation comparativement aux ensembles magnétiques munis de paliers à aimants toroïdaux de l'état de l'art.

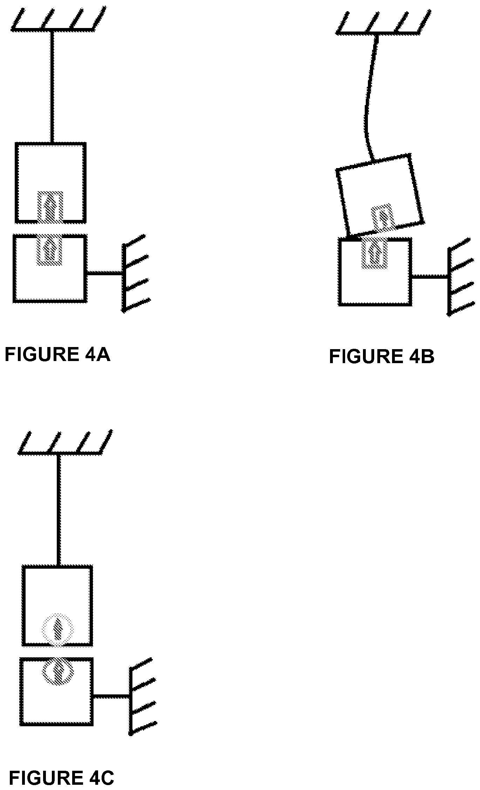

Pour en revenir aux éléments magnétiques 6, 7 de rotor et de stator, au moins un de ces derniers est avantageusement de forme sphérique. La forme des éléments magnétiques influe sur les possibilités d'ajustement de la distance M qui les sépare. En référence aux figures 4A-C, on constate en effet qu'une géométrie sphérique permet de minimiser encore davantage la distance M lorsque l'ensemble rotatif est en position stable, comparativement à une autre géométrie non sphérique. En effet, dans le cas d'une géométrie non sphérique, telle que par exemple cylindrique en référence aux figures 4A et 4B qui illustrent le cas où les deux éléments magnétiques 6 et 7 sont cylindriques, une distance M trop faible induit un risque de désaxement du rotor en rotation et de blocage du palier. Au contraire, il n'y a pas de risque de désaxement du rotor lorsqu'au moins un des éléments magnétiques du rotor et du stator 6, 7 est sphérique, comme l'illustre la figure 4C dans le cas où les deux éléments magnétiques 6 et 7 sont sphériques. Dès lors, les interactions magnétiques entre les éléments magnétiques 6, 7 sont maximisées quel que soit leur positionnement relatif l'un par rapport à l'autre, ce qui permet ainsi de maximiser la force de rappel du rotor.

Selon un mode de réalisation préféré de l'invention, les éléments de rotor et de stator comprennent des aimants sphériques.

Pour en revenir à la structure du rotor 2, lorsque ce dernier tourne autour de son axe A, la partie intermédiaire 12 vient en butée contre le stator 3, ce qui limite son amplitude de rotation. Le rotor 2 décrit donc un cercle incomplet lors d'une rotation autour de son axe A. Avec deux parties intermédiaires 12, le rotor 2 décrit un angle légèrement inférieur à 180° lorsqu'il effectue une rotation autour de son axe A. Il est possible de concevoir la partie intermédiaire 12 de sorte que le rotor 2 puisse décrire un angle adapté au type d'appareil dans lequel il est destiné à fonctionner, et si besoin d'atteindre des angles voisins de 360°.

Cette rotation incomplète du rotor se retrouve cependant de manière générale dans les ensembles rotatifs à paliers magnétiques de l'état de l'art fonctionnant dans des appareils de mesure de couple, à la différence que, pour effectuer une rotation complète du rotor avec ces ensemble rotatifs connus, il est nécessaire de prévoir sur le rotor une butée qui contre les efforts longitudinaux et génère ainsi des frottements. On comprend donc que l'ajout d'une butée fait perdre tout l'intérêt d'utiliser un palier magnétique, dont l'un des objectifs principaux est précisément de permettre une rotation du rotor en évitant les frottements.

Certains ensembles rotatifs à paliers magnétiques de l'état de l'art fonctionnent avec une source d'air comprimé, asséché, et déshuilé, qui réduit fortement les frottements. Cependant, bien que permettant de se passer d'une butée, la mise en place de cette circulation d'air comprimé n'est pas pratique à mettre en place et demande en tout état de cause des efforts de montage et de mise en oeuvre supplémentaires. L'ensemble rotatif à palier magnétique de l'invention permet de s'affranchir de cette circulation d'air comprimé et des contraintes associées.

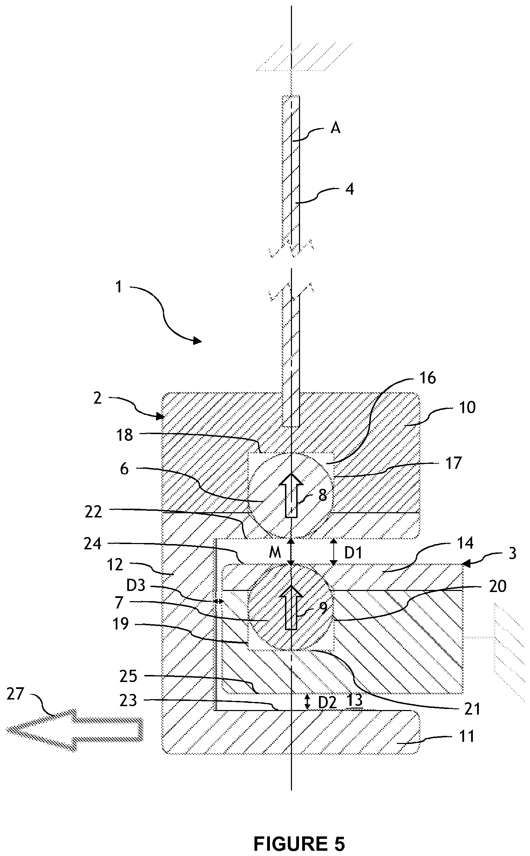

La structure de l'ensemble rotatif 1 de l'invention permet de remplacer de manière simple et rapide une pièce du rotor 2 ou du stator 3. Pour ce faire, il suffit de déplacer le rotor 2 radialement afin de le sortir de son axe A, comme représenté par la flèche 27 sur la Figure 5, à condition que la barre de torsion soit assez flexible pour le permettre. Les cavités 16, 19 et les éléments magnétiques 6, 7 sont alors accessibles, et ces derniers peuvent ainsi être aisément retirés de leur cavité respective. De nouveaux éléments magnétiques 6, 7 peuvent être insérés dans leur cavité 16, 19, puis le rotor 2 est de nouveau positionné dans son axe A. L'ensemble rotatif est alors prêt à fonctionner.

Par ailleurs, l'ensemble rotatif 1 de l'invention offre la possibilité d'ajuster précisément et de manière simple la force de rappel. Pour ce faire, il existe deux possibilités. Une première possibilité consiste à modifier la puissance de l'élément magnétique de rotor et/ou de l'élément magnétique 7 de stator, c'est-à-dire de modifier l'intensité du champ magnétique qu'ils génèrent. D'un point de vue pratique, il s'agit simplement de les remplacer par éléments aux propriétés magnétiques plus importantes, en particulier par des aimants plus puissants. Ainsi, la force d'attraction entre les éléments magnétiques 6, 7 de rotor et de stator augmente avec leurs propriétés magnétiques ou puissance, et par suite, la force de rappel augmente également.

Une seconde possibilité consiste à ajuster la distance M entre les éléments magnétiques 6, 7 de rotor et de stator. Comme décrit précédemment, en rapprochant ou en éloignant les éléments magnétiques 6, 7 l'un de l'autre, on ajuste la force d'attraction entre ces derniers et par suite, la force de rappel.

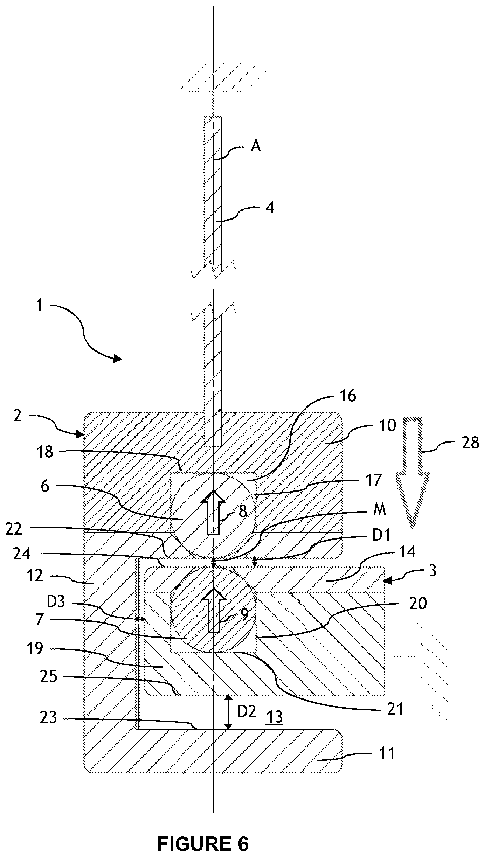

Bien que le remplacement des éléments magnétiques 6, 7 de rotor et de stator soit facilité avec l'ensemble rotatif décrit, l'ajustement de la distance M est cependant plus pratique puisqu'il permet un réglage simple, précis, et rapide de la force de rappel. Si l'on souhaite augmenter la force de rappel, il suffit de rapprocher les éléments magnétiques 6, 7 en déplaçant simplement le rotor vers le bas, c'est-à-dire le long de l'axe A dans une direction opposée au bâti, comme représenté par la flèche 28 sur la Figure 6. La distance D₁ diminue, et la distance D₂ augmente d'autant. Ce faisant, on augmente la stabilité de l'ensemble rotatif.

Par comparaison, avec des paliers magnétiques à aimants toroïdaux coaxiaux et répulsifs de l'état de l'art, l'ajustement de la distance M est plus complexe puisqu'un rapprochement des éléments magnétiques de rotor et de stator 6, 7 engendre un risque de désaxement du rotor 2 et de déstabilisation du palier magnétique, étant donné que l'on se rapproche d'une position instable.

Dans le cas d'un sur-réglage, où la distance D₁ est trop faible, le rotor 2 et le stator 3 peuvent incidemment entrer en contact l'un avec l'autre et engendrer des frottements qui s'opposent à la rotation du rotor. Cependant, un tel sur-réglage n'engendre pas un désaxement du rotor 2, contrairement aux paliers magnétiques à aimants toroïdaux répulsifs de l'état de l'art, mais tout au plus un ralentissement de la vitesse de rotation du rotor 2 sans endommager l'ensemble rotatif ou la barre de torsion, ni présenter un danger pour un opérateur situé à proximité.

Par ailleurs, lorsque le rotor 2 tourne sur lui-même, il est sujet à des oscillations mécaniques. Ces oscillations mécaniques se traduisent par un déplacement du rotor 2 par rapport au stator 3, dans les limites de l'entrefer 13 du rotor. Le rotor oscille selon une fréquence d'oscillation donnée, qui dépend de sa vitesse de rotation et des caractéristiques mécaniques de l'ensemble rotatif. Cette fréquence d'oscillation se situe dans un spectre de fréquences comprenant une pluralité de fréquences d'oscillation, dont en particulier une ou plusieurs fréquences dites « fréquences de résonance ». Lorsque la fréquence d'oscillation du rotor correspond à une fréquence de résonance, le rotor entre en résonance, ce qui dégrade les performances de l'ensemble rotatif et de l'appareil.

La fréquence d'oscillation de résonance du rotor dépend aussi de la force de rappel du rotor. Ainsi, ajuster la force de rappel permet également d'ajuster la fréquence de résonance de l'ensemble rotatif.

Rapprocher les éléments magnétiques 6, 7 de rotor et de stator en déplaçant simplement le rotor vers le bas selon la flèche 28, permet d'augmenter la force de rappel et de déplacer la fréquence de résonance vers les hautes fréquences. On évite ainsi tout risque de résonance lorsque le rotor tourne dans la gamme de vitesse souhaitée.

Au surplus, et dans le cas où le palier magnétique est actif, il est possible d'amortir les oscillations avec un système d'asservissement adapté à cet effet.

### EXEMPLE

Pour caractériser le lien entre la force d'attraction des éléments magnétiques de rotor et de stator, dont résulte la force de rappel, et la fréquence de résonance, des simulations sont réalisées avec le logiciel SolidWorks ^{®}, avec des éléments magnétiques comprenant des aimants, et sous l'hypothèse que les oscillations du rotor ont une amplitude suffisamment faible pour que la force d'attraction exercée par les aimants soit d'amplitude constante et dirigée vers le bas. L'ensemble rotatif utilisé dans ces simulations correspond sensiblement à celui décrit précédemment en accord avec les Figures 1 à 6, le rotor a une masse de 70 grammes et est relié à un bâti par une barre de torsion en titane d'un diamètre de 1 millimètre.

Pour différentes valeurs de force d'attraction des aimants/ de rotor et de stator, on calcule les fréquences de résonance correspondantes (exprimées en Hertz, de symbole Hz). On garde les mêmes aimants de rotor et de stator pour l'ensemble des mesures, et on les rapproche l'un de l'autre en ajustant la distance D₁ entre le rotor et le stator.

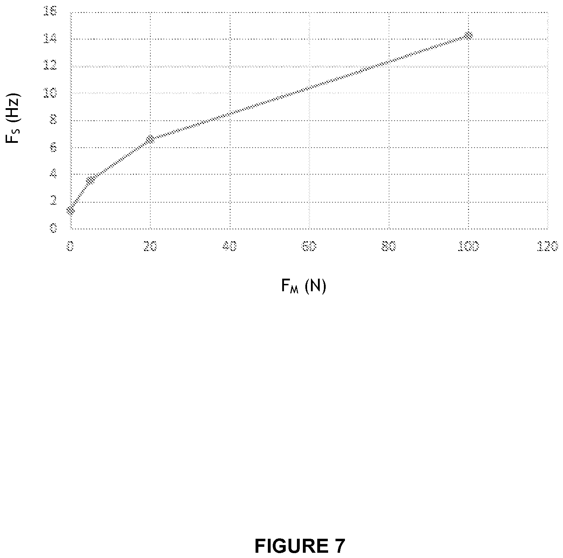

Les résultats obtenus sont regroupés dans le Tableau l ci-dessous et illustrés sous la forme d'un graphe en Figure 7 dont l'abscisse correspond à la force d'attraction des aimants (notée F_{M}) exprimée en Newton (de symbole N) et l'ordonnée correspond à la fréquence de résonance (notée F_{S}) exprimée en Hertz (Hz).

**Tableau I**

| Force d'attraction (N) | Fréquence de résonance (Hz) |
|---|---|
| 0 | 1,38 |
| 5 | 3,6 |
| 20 | 6,62 |
| 100 | 14,29 |

Les résultats montrent que la fréquence de résonance augmente avec la force d'attraction des aimants. Ainsi, il est possible de régler la fréquence de résonance de l'ensemble rotatif par simple réglage de la distance D₁ entre le rotor et le stator, puis de prévoir une vitesse de rotation, et donc une fréquence d'oscillation, du rotor adaptée en conséquence afin d'éviter que sa fréquence d'oscillation ne corresponde à la fréquence de résonance.

## Revendications

1. Ensemble rotatif (1), notamment pour un appareil de mesure rhéologique, comprenant:
- un stator (3),
- un rotor (2) mobile en rotation par rapport au stator (3), le rotor (2) étant maintenu axialement par un moyen de maintien axial (4) empêchant le déplacement du rotor (2) le long de son axe (A) de rotation, le moyen de maintien axial (4) comprenant une tige flexible adaptée pour être fixée à un bâti (5) et qui autorise un déplacement radial du rotor (2),
- un palier magnétique comprenant un élément en matériau magnétique (6) de rotor monté sur le rotor (2) et un élément en matériau magnétique (7) de stator monté sur le stator (3),
dans lequel l'ensemble rotatif (1) présente une position stable dans laquelle le rotor (2) est aligné avec son axe (A) de rotation et les éléments en matériau magnétique sont en regard l'un de l'autre selon l'axe (A) de rotation du rotor et sont séparés l'un de l'autre d'une distance (M) déterminée, et dans lequel les éléments en matériau magnétique sont configurés pour s'attirer l'un vers l'autre, de sorte à générer une force de rappel qui s'oppose au désaxement dudit rotor (2),
ledit ensemble étant **caractérisé en ce que** l'un au moins des éléments en matériau magnétique de rotor et de stator est un aimant sphérique.

2. Ensemble rotatif selon la revendication 1, dans lequel l'élément en matériau magnétique (6) de rotor et l'élément en matériau magnétique (7) de stator comprennent tous deux des aimants.

3. Ensemble rotatif selon l'une des revendications 1 ou 2, dans lequel l'élément en matériau magnétique (6) de rotor et l'élément en matériau magnétique (7) de stator sont alignés selon l'axe (A) de rotation du rotor lorsque l'ensemble rotatif (1) est en position stable.

4. Ensemble rotatif selon l'une des revendications précédentes, dans lequel l'élément en matériau magnétique (6) de rotor et/ou l'élément en matériau magnétique (7) de stator sont des aimants permanents.

5. Ensemble rotatif selon l'une des revendications 1 à 3, dans lequel l'élément en matériau magnétique (6) de rotor et/ou l'élément en matériau magnétique (7) de stator sont des électroaimants.

6. Ensemble rotatif selon l'une des revendications précédentes, dans lequel les éléments en matériau magnétique (6, 7) de rotor et de stator forment chacun un dipôle magnétique (8, 9), et dans lequel, lorsque le rotor est en position stable, les dipôles magnétiques (8, 9) de rotor et de stator sont alignés l'un avec l'autre selon l'axe (A) du rotor et sont orientés dans une même direction de manière à être attirés l'un vers l'autre.

7. Ensemble rotatif selon l'une des revendications précédentes, **caractérisé en ce que** le rotor (2) comprend une tête (10) reliée au moyen de maintien axial (4), une base (11) agencée en regard de la tête (10), et une partie intermédiaire (12) qui joint la tête (10) du rotor à sa base (11), la tête (10), la base (11), et la partie intermédiaire délimitant un entrefer (13) de rotor adapté pour recevoir une partie fonctionnelle (14) de stator (3) munie de l'élément en matériau magnétique de stator (7), l'élément en matériau magnétique (6) de rotor et l'élément en matériau magnétique (7) de la partie fonctionnelle (14) de stator (3) étant alignés avec l'axe (A) du rotor (2) lorsque l'ensemble rotatif (1) est en position stable.

8. Ensemble rotatif selon la revendication 7, **caractérisé en ce que** le stator (3) s'étend orthogonalement à l'axe (A) du rotor (2).

9. Ensemble rotatif selon la revendication 7, dans lequel la distance (M) est ajustable par ajustement de la position axiale de la partie fonctionnelle (14) du stator (3) dans l'entrefer (13) du rotor (2), et ladite distance (M) est minimale lorsque l'ensemble rotatif est en position stable.

10. Ensemble rotatif selon l'une des revendications précédentes, **caractérisé en ce que** le palier magnétique est passif.

11. Appareil de mesure rhéologique pour la réalisation d'une mesure de rhéologie, **caractérisé en ce qu'**il comprend au moins un ensemble rotatif (1) selon l'une des revendications précédentes.

## Patentansprüche

1. Dreheinheit (1), insbesondere für ein Gerät zur rheologischen Messung, umfassend:
- einen Stator (3),
- einen Rotor (2), der in Bezug auf den Stator (3) drehbar ist, wobei der Rotor (2) durch ein axiales Haltemittel (4), das die Verschiebung des Rotors (2) entlang seiner Drehachse (A) verhindert, axial festgehalten wird, wobei das axiale Haltemittel (4) eine flexible Stange umfasst, die angepasst ist, um an einem Gestell (5) befestigt zu werden, und die eine radiale Verschiebung des Rotors (2) zulässt,
- ein Magnetlager, das ein Rotorelement aus magnetischem Material (6), das auf dem Rotor (2) angebracht ist, und ein Statorelement aus magnetischem Material (7), das auf dem Stator (3) angebracht ist, umfasst,
wobei die Dreheinheit (1) eine stabile Position aufweist, in der der Rotor (2) mit seiner Drehachse (A) fluchtet und die Elemente aus magnetischem Material gemäß der Drehachse (A) des Rotors einander gegenüberliegen und um eine bestimmte Distanz (M) voneinander beabstandet sind, und wobei die Elemente aus magnetischem Material ausgestaltet sind, sich gegenseitig anzuziehen, sodass eine Rückstellkraft erzeugt wird, die sich dem Achsversatz des Rotors (2) entgegensetzt,
wobei die Einheit **dadurch gekennzeichnet ist, dass** wenigstens eines des Rotor- und Statorelements aus magnetischem Material ein Kugelmagnet ist.

2. Dreheinheit nach Anspruch 1, wobei das Rotorelement aus magnetischem Material (6) und das Statorelement aus magnetischem Material (7) beide Magneten umfassen.

3. Dreheinheit nach einem der Ansprüche 1 oder 2, wobei das Rotorelement aus magnetischem Material (6) und das Statorelement aus magnetischem Material (7) gemäß der Drehachse (A) des Rotors fluchten, wenn sich die Dreheinheit (1) in stabiler Position befindet.

4. Dreheinheit nach einem der vorstehenden Ansprüche, wobei das Rotorelement aus magnetischem Material (6) und/oder das Statorelement aus magnetischem Material (7) Permanentmagneten sind.

5. Dreheinheit nach einem der Ansprüche 1 bis 3, wobei das Rotorelement aus magnetischem Material (6) und/oder das Statorelement aus magnetischem Material (7) Elektromagneten sind.

6. Dreheinheit nach einem der vorstehenden Ansprüche, wobei das Rotor- und Statorelement aus magnetischem Material (6, 7) jeweils einen magnetischen Dipol (8, 9) bilden, und wobei, wenn sich der Rotor in stabiler Position befindet, die magnetischen Dipole (8, 9) von Rotor und Stator gemäß der Achse (A) des Rotors miteinander fluchten und in einer gleichen Richtung ausgerichtet sind, sodass sie gegenseitig angezogen werden.

7. Dreheinheit nach einem der vorstehenden Ansprüche, **dadurch gekennzeichnet, dass** der Rotor (2) einen Kopf (10), der mit dem axialen Haltemittel (4) verbunden ist, eine Basis (11), die gegenüber dem Kopf (10) angeordnet ist, und einen Zwischenteil (12) umfasst, der den Kopf (10) des Rotors mit seiner Basis (11) verbindet, wobei der Kopf (10), die Basis (11) und der Zwischenteil einen Rotorluftspalt (13) begrenzen, der angepasst ist, um einen Funktionsteil (14) des Stators (3) aufzunehmen, der mit dem Statorelement aus magnetischem Material (7) versehen ist, wobei das Rotorelement aus magnetischem Material (6) und das Element aus magnetischem Material (7) des Funktionsteils (14) des Stators (3) mit der Achse (A) des Rotors (2) fluchten, wenn sich die Dreheinheit (1) in stabiler Position befindet.

8. Dreheinheit nach Anspruch 7, **dadurch gekennzeichnet, dass** sich der Stator (3) orthogonal zu der Achse (A) des Rotors (2) erstreckt.

9. Dreheinheit nach Anspruch 7, wobei die Distanz (M) durch Einstellung der axialen Position des Funktionsteils (14) des Stators (3) im Luftspalt (13) des Rotors (2) einstellbar ist und die Distanz (M) minimal ist, wenn sich die Dreheinheit in stabiler Position befindet.

10. Dreheinheit nach einem der vorstehenden Ansprüche, **dadurch gekennzeichnet, dass** das Magnetlager passiv ist.

11. Gerät zur rheologischen Messung für die Durchführung einer Rheologiemessung, **dadurch gekennzeichnet, dass** es wenigstens eine Dreheinheit (1) nach einem der vorstehenden Ansprüche umfasst.

## Claims

1. Rotary assembly (1), in particular for a rheological measurement apparatus, comprising:
- a stator (3),
- a rotor (2) that can rotate with respect to the stator (3), the rotor (2) being axially retained by an axial retaining means (4) preventing the movement of the rotor (2) along the axis (A) of rotation thereof, the axial retaining means (4) comprising a flexible rod suitable for being attached to a frame (5) and which allows a radial movement of the rotor (2),
- a magnetic bearing comprising a rotor element (6) made of magnetic material mounted on the rotor (2) and a stator element made of magnetic material (7) mounted on the stator (3),
wherein the rotary assembly (1) has a stable position in which the rotor (2) is aligned with the axis (A) of rotation thereof and the elements made of magnetic material are facing each other along the axis (A) of rotation of the rotor and are separated from each other by a given distance (M), and wherein the elements made of magnetic material are configured to attract each other, so as to generate a return force which opposes the axial misalignment of said rotor (2),
said assembly being **characterised in that** at least one of the rotor and stator elements made of magnetic material is a spherical magnet.

2. Rotary assembly according to claim 1, wherein the rotor element made of magnetic material (6) and the stator element made of magnetic material (7) both comprise magnets.

3. Rotary assembly according to one of claims 1 or 2, wherein the rotor element made of magnetic material (6) and the stator element made of magnetic material (7) are aligned along the axis (A) of rotation of the rotor when the rotary assembly (1) is in a stable position.

4. Rotary assembly according to one of the preceding claims, wherein the rotor element made of magnetic material (6) and/or the stator element made of magnetic material (7) are permanent magnets.

5. Rotary assembly according to one of claims 1 to 3, wherein the rotor element made of magnetic material (6) and/or the stator element made of magnetic material (7) are electromagnets.

6. Rotary assembly according to one of the preceding claims, wherein the rotor and stator elements made of magnetic material (6, 7) each form a magnetic dipole (8, 9), and wherein, when the rotor is in a stable position, the rotor and stator magnetic dipoles (8, 9) are aligned with each other along the axis (A) of the rotor and are oriented in the same direction in such a way as to attract each other.

7. Rotary assembly according to one of the preceding claims, **characterised in that** the rotor (2) comprises a head (10) connected to the axial retaining means (4), a base (11) arranged facing the head (10), and an intermediate portion (12) which joins the head (10) of the rotor to its base (11), the head (10), the base (11), and the intermediate portion delimiting a rotor air gap (13) suitable for receiving a stator (3) functional portion (14) provided with the stator element made of magnetic material (7), the rotor element made of magnetic material (6) and the stator (3) functional portion (14) element made of magnetic material (7) being aligned with the axis (A) of the rotor (2) when the rotary assembly (1) is in a stable position.

8. Rotary assembly according to claim 7, **characterised in that** the stator (3) extends orthogonally to the axis (A) of the rotor (2).

9. Rotary assembly according to claim 7, wherein the distance (M) can be adjusted by adjusting the axial position of the functional portion (14) of the stator (3) in the air gap (13) of the rotor (2), and said distance (M) is minimal when the rotary assembly is in a stable position.

10. Rotary assembly according to one of the preceding claims, **characterised in that** the magnetic bearing is passive.

11. Rheological measurement apparatus for taking a rheology measurement, **characterised in that** it comprises a least one rotary assembly (1) according to one of the preceding claims.
